# EUROPÄISCHE PATENTSCHRIFT

(11) **EP 1 334 329 B1**
(45) Veröffentlichungstag und Bekanntmachung des Hinweises auf die Patenterteilung: **12.12.2007**
(21) Anmeldenummer: 01976310.1
(22) Anmeldetag: 13.10.2001
(51) Int. Cl.: G01D 5/244

(54) **VERFAHREN ZUR POSITIONSBESTIMMUNG UND POSITIONSMESSEINRICHTUNG ZUR AUSFÜHRUNG DES VERFAHRENS**
METHOD FOR DETERMINING A POSITION AND POSITION MEASUREMENT DEVICE FOR CARRYING OUT SAID METHOD
PROCEDE POUR DETERMINER UNE POSITION ET DISPOSITIF DE MESURE DE POSITION PERMETTANT DE METTRE EN OEUVRE CE PROCEDE

(30) Priorität: 31.10.2000 DE 10054075
(43) Veröffentlichungstag der Anmeldung: 13.08.2003
(73) Patentinhaber: Dr. Johannes Heidenhain GmbH, 83292 Traunreut (DE)
(72) Erfinder: DRESCHER, Jörg, 83083 Riedering (DE); HAUSSCHMID, Mathias, 83349 Palling (DE); HUBER-LENK, Herbert, 83365 Nussdorf/Sondermoning (DE); REITER, Herbert, 84518 Garching/Alz (DE); STREITWIESER, Johann, 83355 Grabenstätt (DE); HOLZAPFEL, Wolfgang, 83119 Obing (DE)
(86) Internationale Anmeldenummer: PCT/EP2001/011860
(87) Internationale Veröffentlichungsnummer: WO 2002/037059

(56) Entgegenhaltungen:
- DE-A- 2 729 697
- US-A- 5 594 241

## Beschreibung

Die Erfindung betrifft ein Verfahren zur Positionsbestimmung gemäß dem Oberbegriff des Anspruches 1 bzw. 2 sowie eine Positionsmesseinrichtung zur Ausführung des Verfahrens nach dem Oberbegriff des Anspruches 7 bzw. 8.

Inkrementale Positionsmessverfahren und Positionsmesseinrichtungen werden zur hochgenauen Messung der Position von bewegten Objekten in Maschinen, wie beispielsweise Werkzeugmaschinen oder Wafersteppern eingesetzt. Dabei muss die Positionsmesseinrichtung die Position des Objektes zu ganz bestimmten Zeitpunkten messen und die Position der die Bewegung des Objektes steuernde Regelelektronik zugeführt werden. Die Zeitpunkte definiert die externe Regelelektronik. Damit zu diesen Zeitpunkten ein Positionsmesswert zur Verfügung gestellt werden kann, ermittelt die Positionsmesseinrichtung in einem vorgegebenen Zeitraster oder aufgrund eines externen Signals Positionsmesswerte durch Interpolation von mehreren gegeneinander phasenverschobenen Abtastsignalen gleicher Frequenz.

Gemäß der DE 27 29 697 A1 sind hierzu vor der Interpolationseinheit Speicher in Form von Sample- und Hold-Schaltungen angeordnet, mit denen die Momentanwerte aller Abtastsignale gleichzeitig zu den vorgegebenen Zeitpunkten abgespeichert werden. Aus diesen Momentwerten werden in der Interpolationseinheit Positionsmesswerte gebildet. Wie in der DE 27 29 697 A1 ausdrücklich erwähnt, ist dieses Verfahren besonders zur Messung von bewegten Objekten geeignet.

Nachteilig dabei ist, dass die Abtastsignale in den einzelnen Abtastkanälen von der Signalerzeugung - also von der Abtaststelle - bis zu den Speichern durch unterschiedliche Laufzeitverzögerungen beeinflusst werden, was bei der Interpolation zu Messfehlern führt.

Aufgabe der Erfindung ist es daher, diesen Nachteil zu beheben und dadurch die Messgenauigkeit zu erhöhen.

Gelöst wird diese Aufgabe durch ein Verfahren mit den Merkmalen des Anspruches 1 bzw. 2 sowie durch eine Positionsmesseinrichtung mit den Merkmalen des Anspruches 7 bzw. 8.

Vorteilhafte Ausgestaltungen sind in den abhängigen Ansprüchen angegeben.

Mit Hilfe der Zeichnungen wird die Erfindung anhand von Ausführungsbeispielen näher erläutert.

Es zeigt
- Figur 1: eine erste Positionsmesseinrichtung gemäß der Erfindung,
- Figur 2: eine Schaltung zur frequenzabhängigen Verzögerung des Einspeicherbefehls,
- Figur 3: eine Anordnung zur Ermittlung der Laufzeit in einem Abtastkanal,
- Figur 4: eine zweite Anordnung zur Ermittlung der Laufzeit,
- Figur 5: eine dritte Anordnung zur Ermittlung der Laufzeit und
- Figur 6: eine zweite Positionsmesseinrichtung gemäß der Erfindung.

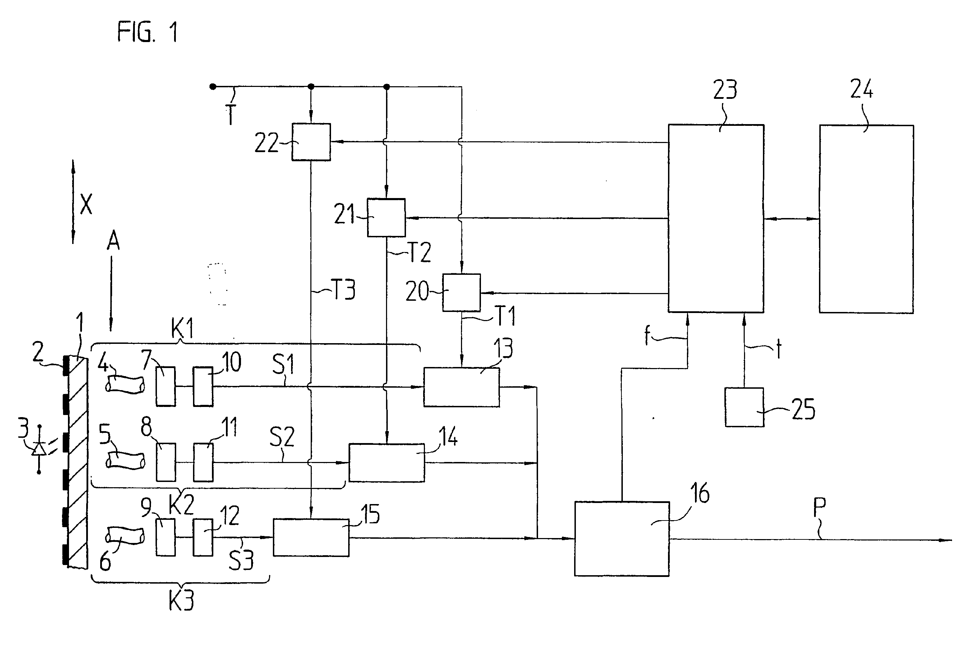

Anhand der Figuren 1 bis 5 wird eine erste Ausführungsform der Erfindung erläutert. In Figur 1 ist eine lichtelektrische inkrementale Positionsmesseinrichtung schematisch dargestellt. Sie besteht in bekannter Weise aus einem in Messrichtung X bewegbaren Maßstab 1 mit einer periodischen Teilung 2. Die Teilung 2 wird von einer Lichtquelle 3 beleuchtet und das Lichtstrahlenbündel wird von der Teilung 2 in Abhängigkeit der Momentanposition des Maßstabes 1 moduliert. Es entstehen drei um 120° gegeneinander phasenverschobene optische Abtastsignale. Jedes der Abtastsignale wird von der Abtaststelle A über einen Lichtwellenleiter 4, 5, 6 zu einem Photodetektor 7, 8, 9 geleitet und dort in ein elektrisches Abtastsignal S1, S2, S3 gewandelt. Die elektrischen Abtastsignale S1, S2, S3 werden Verstärkern 10, 11, 12 zugeführt und gelangen schließlich zu Speicherelementen 13, 14, 15, in denen jeweils ein Momentanwert der Abtastsignale S1, S2, S3 aufgrund eines Einspeicherbefehls T abgespeichert wird. Die abgespeicherten Momentanwerte werden einer Interpolationseinheit 16 zugeführt, in der ein Positionsmesswert P gebildet wird, welcher die absolute Position innerhalb einer Teilungsperiode oder eines Bruchteils der Teilungsperiode der Teilung 2 definiert. Der Positionsmesswert P wird einer nicht dargestellten in der Positionsmesseinrichtung integrierten oder einer externen Auswerteeinheit zur Verfügung gestellt, wo er mit einem Zählerstand der die Teilungsperioden oder Bruchteile der Teilungsperioden definiert kombiniert wird.

Die Übertragungsstrecke von der Abtaststelle A, also der Erzeugung der optischen Abtastsignale ausgehend bis zu den Speicherelementen 13, 14, 15 wird nachfolgend als Abtastkanal K1, K2, K3 bezeichnet. Jeder Abastkanal K1, K2, K3 enthält die Laufzeit der Abtastsignale S1, S2, S3 beeinflussende Komponenten. Diese Komponenten bestehen im Beispiel jeweils aus einem Lichtwellenleiter 4, 5, 6, einem Photodetektor 7, 8, 9 sowie einem Verstärker 10, 11, 12 und den elektrischen Leitungen. Die Summe der optischen und elektrischen Laufzeiten sind in den einzelnen Abtastkanälen K1, K2, K3 unterschiedlich. Dies resultiert aus unterschiedlichen Leitungslängen und Bauteilestreuung.

Die unterschiedlichen Laufzeiten der Abtastsignale S1, S2, S3 in den einzelnen Abtastkanälen K1, K2, K3 werden gemäß der ersten Ausführung der Erfindung dadurch kompensiert, dass die Einspeicherung von Momentanwerten der Abtastsignale S1, S2, S3 angepasst an die unterschiedlichen Laufzeiten erfolgt. Die Einspeicherung zumindest eines der Abtastsignale S1, S2, S3 erfolgt gegenüber zumindest eines der weiteren Abtastsignale S1, S2, S3 um eine einstellbare Zeit verzögert. Dadurch ist gewährleistet, dass alle abgespeicherten Momentanwerte der Abtastsignale S1, S2, S3 gleichzeitig auftretende Momentanwerte der Abtastsignale S1, S2, S3 an der Abtaststelle A sind. Die zeitliche Verzögerung zwischen dem Auftreten der Momentanwerte an der Abtaststelle A und dem Einspeichern in die Speicherelemente 13, 14, 15 kann somit für alle Abtastkanäle K1, K2, K3 auf einen konstanten Wert eingestellt werden. Dieser Zeitversatz kann dabei in den nachfolgenden Berechnungen durch Inter- oder Extrapolationsverfahren von Positionswerten berücksichtigt und kompensiert werden.

Zur individuellen Verzögerung des gemeinsamen Einspeicherbefehls T sind Verzögerungsglieder 20, 21, 22 in Form von digital einstellbaren Delaylines vorgesehen, so dass der gemeinsame Einspeicherbefehl T als Einspeicherbefehle T1, T2, T3 individuell angepasst verzögert an die Speicherelemente 13, 14, 15 gegeben wird.

Wesentlich ist dabei, dass die Verzögerungsglieder 20, 21, 22 derart eingestellt sind, dass gewährleistet ist, dass alle eingespeicherten Momentanwerte der Abtastsignale S1, S2, S3 von zeitgleich an der Abtaststelle A aufgetretenen Momentanwerten resultieren. Die Interpolationseinheit 16 sieht also für alle Abtastkanäle K1, K2, K3 eine konstante Verzögerung zwischen dem gemeinsamen Einspeicherbefehl T und dem Auftreten von Momentanwerten aller Abtastsignale S1, S2, S3 an der Abtaststelle A. Durch die erfindungsgemäßen Maßnahmen werden auch unterschiedliche Verzögerungen der Übertragung des Einspeicherbefehls T bzw. der Befehle T1, T2, T3 berücksichtigt und ausgeglichen.

Die Verzögerung der Verzögerungsglieder 20, 21, 22 kann so eingestellt werden, dass kein Zeitversatz zwischen dem Auftreten des Einspeicherbefehls T und dem Auftreten der Momentanwerte der abgespeicherten Abtastsignale S1, S2, S3 an der Abtaststelle A resultiert. Dabei entspricht die Laufzeit jedes der Abtastsignale S1, S2, S3 von der Abtaststelle A ausgehend bis zum Speicherelement 13, 14, 15 - also im Abtastkanal K1, K2, K3 - exakt der eingestellten Verzögerungszeit des gemeinsamen Einspeicherbefehls in den jeweiligen Verzögerungsgliedern 20, 21, 22.

Das Speicherelement 13, 14, 15 kann ein Analog-Digitalwandler sein, der den momentan anstehenden Analogwert des Abtastsignals S1, S2, S3 zum Zeitpunkt des Einspeicherbefehls T1, T2, T3 übernimmt und A/D wandelt. Das Speicherelement 13, 14, 15 kann aber auch ein Sample- und Hold-Element sein, welches den Momentanwert des Abtastsignals S1, S2, S3 zum Zeitpunkt des Einspeicherbefehls T1, T2, T3 abspeichert und der Interpolationseinheit 16 zur Verfügung stellt. Das Speicherelement 13, 14, 15 kann an beliebiger Stelle im Abtastkanal K1, K2, K3 angeordnet sein, dabei muss das ihm zugeordnete Verzögerungsglied 20, 21, 22 jeweils die zwischen der Abtaststelle A und dem Speicherelement 13, 14, 15 auftretende Laufzeitdifferenz der einzelnen Abtastsignale S1, S2, S3 ausgleichen.

Die Interpolationseinheit 16 unterteilt eine Signalperiode der Abtastsignale S1, S2, S3 in kleinere Schritte. Diese Unterteilung erfolgt aufgrund analoger oder digitaler Momentanwerte der zueinander phasenverschobenen Abtastsignale S1, S2, S3. Handelsübliche Interpolationseinheiten 16 verwenden hierzu um 90° gegeneinander phasenverschobene sinusförmige Abtastsignale S1, S2, S3. Deshalb ist es vorteilhaft, die drei um 120° gegeneinander phasenverschobenen Abtastsignale vor der Interpolation in zwei um 90° gegeneinander phasenverschobene Abtastsignale zu wandeln und diese in bekannter Weise einer analog oder digital arbeitenden Interpolationseinheit 16 mit einer Widerstandskette, einem arctan-Rechner oder einer Tabelleninterpolation zuzuführen.

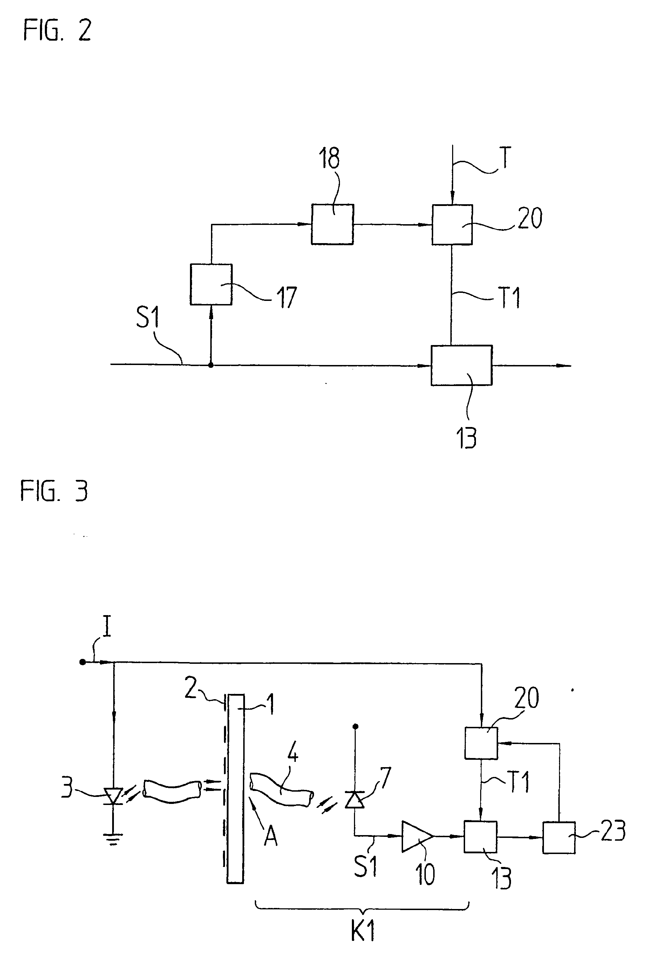

Bei hohen Anforderungen der Messgenauigkeit, z.B. bei Wafersteppern sollten am Messort keine Wärmequellen angeordnet werden. Deshalb werden die aktiven Komponenten, wie Lichtquelle 3, Photodetektoren 7, 8, 9 und Verstärker 10, 11, 12 entfernt vom Messort angeordnet. Die Übertragung des Lichtes erfolgt über Lichtwellenleiter4, 5, 6, von denen einige in Figur 1 bzw. Figur 2 schematisch dargestellt sind. Mit der Erfindung wird aber die Messgenauigkeit von Messeinrichtungen auch ohne Lichtwellenleiter 4, 5, 6 verbessert, da auch die Photodetektoren 7, 8, 9 und weitere elektrische Komponenten 10, 11, 12 die Laufzeit der Abtastsignale S1, S2, S3 beeinflussen.

Die Erfindung ist besonders vorteilhaft bei lichtelektrischen Positionsmesseinrichtungen mit einem optisch abtastbaren Maßstab 1 einsetzbar, sie ist aber auch bei Interferometern, bei magnetisch, kapazitiv sowie induktiv abtastbaren Teilungen einsetzbar.

Der Zeitversatz, den die Verzögerungsglieder 20, 21, 22 verursachen, wird beispielsweise vor dem Messbetrieb festgelegt und eingestellt. Diese Einstellung kann mit Hilfe von Kalibriermessungen vorgenommen werden und im Messbetrieb angepasst werden, so dass auch dynamische Laufzeitveränderungen, z.B. durch die Frequenzabhängigkeit der Verstärker 10, 11, 12 oder Temperaturdriften ausgeglichen werden können. Der Zeitversatz kann auch auf eine gewünschte konstante Größe eingestellt werden.

Die Einstellung der Zeitverzögerung der Verzögerungsglieder 20, 21, 22 erfolgt in dem dargestellten Beispiel durch einen Rechner 23, so dass neben einem statischen Abgleich der Verzögerungszeiten in einem Kalibrierzyklus auch eine dynamische Anpassung möglich ist. Die einzustellende Verzögerung wird dabei durch vorher ermittelte und in einem Korrekturspeicher (Tabelle) 24 abgelegte Messwerte gebildet und/oder durch das bekannte Verhalten einzelner Einflüsse wie der eingangsfrequenzabhängigen Laufzeit der Verstärker 10, 11, 12.

In Figur 1 ist die dynamische Korrektur schematisch dargestellt. Aufgrund der Positionsmesswerte P oder aufgrund eines der Abtastsignale S1, S2, S3 wird die Frequenz f der Abtastsignale S1, S2, S3 ermittelt und davon abhängig die Verzögerungszeit der Verzögerungsglieder 20, 21, 22 eingestellt. Weiterhin werden äußere Einflüsse, wie z.B. die Temperatur t über Sensoren 25 gemessen und abhängig davon die Verzögerungszeit verändert.

Eine andere Möglichkeit der frequenzabhängigen Anpassung der Verzögerungszeit ist in Figur 2 für einen Abtastkanal dargestellt. Dabei wird die Frequenz des Abtastsignals S1 erfasst und davon abhängig die Verzögerungszeit des Verzögerungsglieds 20 dynamisch verändert. Hierzu ist ein Frequenzzähler 17 sowie ggf. ein Speicher 18 vorgesehen, der dem Verzögerungsglied 20 in Abhängigkeit der momentanen Frequenz des Abtastsignals S1 eine vorab ermittelte und abgespeicherte Verzögerungszeit zuordnet.

Die Verzögerungsglieder 20, 21, 22 sind digitale oder analoge Elemente. Bei analoger Betriebsweise ist der Speicher 18 aus Figur 2 durch einen Frequenz-Spannungswandler ersetzt.

Zur Messung der aktuellen Laufzeit eines Abtastsignals S1, S2, S3 in einem Abtastkanal K1, K2, K3 wird gemäß Figur 3 an der Abtaststelle A ein Impuls I aufgeschaltet, beispielsweise durch die vorhandene Lichtquelle 3 oder eine zusätzliche Quelle. Der aufgeschaltete Impuls I durchläuft die gleiche Strecke wie ein Abtastsignal S1, S2, S3 und erfährt dadurch die gleichen Verzögerungszeiten. Dieses Ausführungsbeispiel ist in Figur 3 für einen der Abtastkanäle K1 dargestellt. Der Impuls I wird auch als Einspeicherbefehl verwendet und durchläuft hier ebenfalls die gleiche Strecke wie der Einspeicherbefehl T im normalen Messbetrieb. Durch die Messung der Zeit zwischen dem an dem Speicherelement 13 auftretenden Einspeicherbefehl I und dem am Speicherelement 13 über den Abtastkanal K1 (über Elemente 7, 10, 13) kommenden Impuls I kann die erforderliche Verzögerungszeit ermittelt werden.

Durch wiederholtes Aufschalten des Impulses 1 und Verstellen der Verzögerungszeit des Verzögerungsgliedes 20 wird die Abspeicherung eines Momentanwertes zum Auftreten des Impulses I hin verschoben. Die Verzögerungszeit wird soweit erhöht, bis der abgespeicherte Momentanwert des Abtastsignals S1 aufgrund des Impulses I ansteigt. Dann ist die Einspeicherung auf die steigende Flanke des Impulses I eingestellt und die eingestellte Verzögerungszeit des Verzögerungsgliedes 20 entspricht der Laufzeit des Impulses I im Abtastkanal K1. Die Verzögerungszeit kann auch soweit erhöht werden, bis der abgespeicherte Momentanwert maximal ist. Die Ermittlung der Laufzeit kann durch die Berechnung des geometrischen Schwerpunktes des aufgenommenen Impulses I bestimmt werden. Hierdurch findet eine Mittelung der Eichmessungen statt und Fehler der Verzögerungsglieder 20, 21, 22, Rauschen und Abtastzeitpunktjitter werden verringert. Insbesondere kann die Laufzeit zwischen den einzelnen Abtastkanälen K1, K2, K3 durch Korrelationsverfahren sehr genau eingestellt werden.

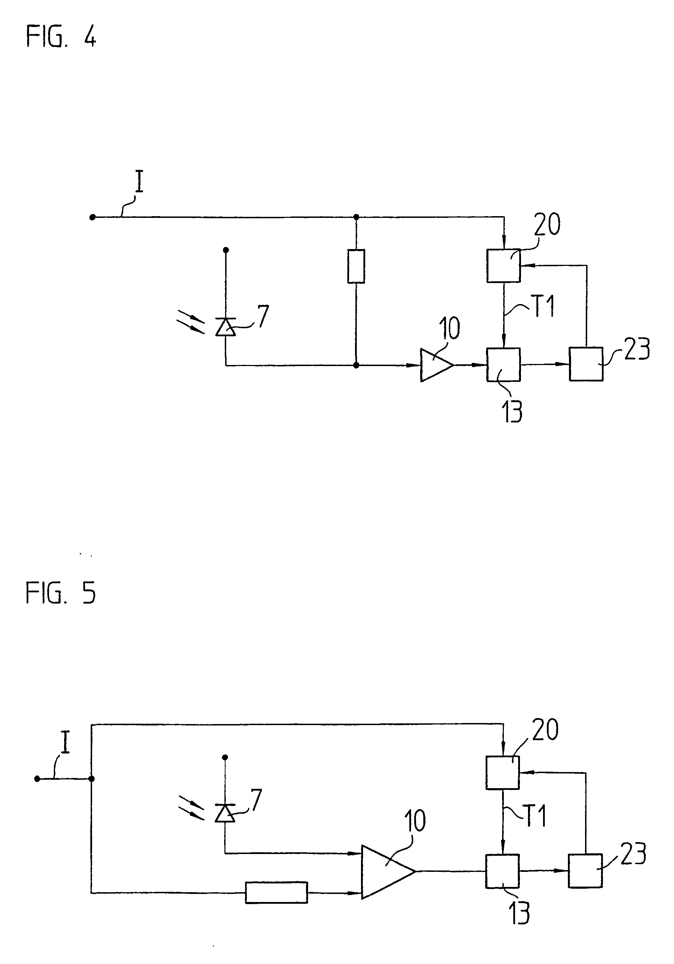

Eine weitere Möglichkeit der Einkopplung eines Impulses I in den Abtastkanal K1 ist in Figur 4 dargestellt. Parallel zum Photodetektor 7 wird der Impuls I eingespeist.

Alternativ dazu wird gemäß Figur 5 der Impuls I auf einen zweiten Eingang des Verstärkers 10 gelegt.

Bei einer Positionsmesseinrichtung mit einem Maßstab kann die Erzeugung des Impulses 1 durch eine geeignete Strukturierung des Maßstabes erfolgen. Im Falle eines Interferometers kann die Laserlichtquelle zur Erzeugung des Impulses I moduliert werden.

Zur Ermittlung von frequenzabhängigen Laufzeiten in einem der Abtastkanäle K1, K2, K3 werden Prüfsignale I verschiedener Frequenzen in einen Abtastkanal K1, K2, K3 eingespeist. Aufgrund der Änderung der an den Speicherelementen 13, 14, 15 anstehenden Abtastsignalen S1, S2, S3 kann auf die frequenzabhängigen Laufzeiten geschlossen werden.

Zusammenfassend betrifft die erste Ausführung der Erfindung also ein Verfahren zur Positionsbestimmung mit folgenden Verfahrensschritten:
Erzeugen mehrerer positionsabhängiger Abtastsignale (S1, S2, S3);
Übertragen jedes der Abtastsignale (S1, S2, S3) von einer Abtaststelle (A) über einen Abtastkanal (K1, K2, K3) zu einem Speicherelement (13, 14, 15);
Abspeichern eines an dem Speicherelement (13, 14, 15) anstehenden Momentanwertes zu einem Einspeicherzeitpunkt;
Bilden eines Positionsmesswertes (P) aus den abgespeicherten Momentanwerten der Abtastsignale (S1, S2, S3), wobei
die Laufzeiten der Abtastsignale (S1, S2, S3) in zumindest zwei Abtastkanälen (K1, K2, K3) unterschiedlich sind, und das Abspeichern zu an die unterschiedlichen Laufzeiten angepassten Zeitpunkten erfolgt, so dass die abgespeicherten Momentanwerte der Abtastsignale (S1, S2, S3) Momentanwerte sind, die zu einem gemeinsamen Zeitpunkt an der Abtaststelle (A) aufgetreten sind.

Die erste Ausführung der Erfindung betrifft zusammenfassend auch eine Positionsmesseinrichtung mit
einer Abtaststelle (A) zur Erzeugung mehrerer positionsabhängiger Abtastsignale (S1, S2, S3);
Abtastkanälen (K1, K2, K3) zur Übertragung der Abtastsignale (S1, S2, S3) von der Abtaststelle (A) zu Speicherelementen (13, 14, 15), wobei jedem Abtastsignal (S1, S2, S3) ein Abtastkanal (K1, K2, K3) und ein Speicherelement (13, 14, 15) zugeordnet ist;
einer Auswerteeinheit (16) zur Bildung eines Positionsmesswertes (P) aus in den Speicherelementen (13, 14, 15) übernommenen Momentanwerten der Abtastsignale (S1, S2, S3);
Mittel (20, 21, 22), um die Speicherung von Momentanwerten der Abtastsignale (S1, S2, S3) zur Kompensation von unterschiedlichen Laufzeiten der Abtastsignale (S1, S2, S3) in den Abtastkanälen (K1, K2, K3) zu unterschiedlichen Zeitpunkten zu veranlassen, so dass die abgespeicherten Momentanwerte der Abtastsignale (S1, S2, S3) Momentanwerte sind, die zu einem gemeinsamen Zeitpunkt an der Abtaststelle (A) aufgetreten sind.

Die oben beschriebene erste Ausführung der Erfindung hat den Vorteil, dass in den Abtastkanälen K1, K2, K3 keine zusätzlichen frequenzabhängigen Bauelemente eingebracht sind, und dass die Zeitverzögerung des Impulses T mit definierten Flanken und definierter Amplitude sehr exakt einstellbar ist.

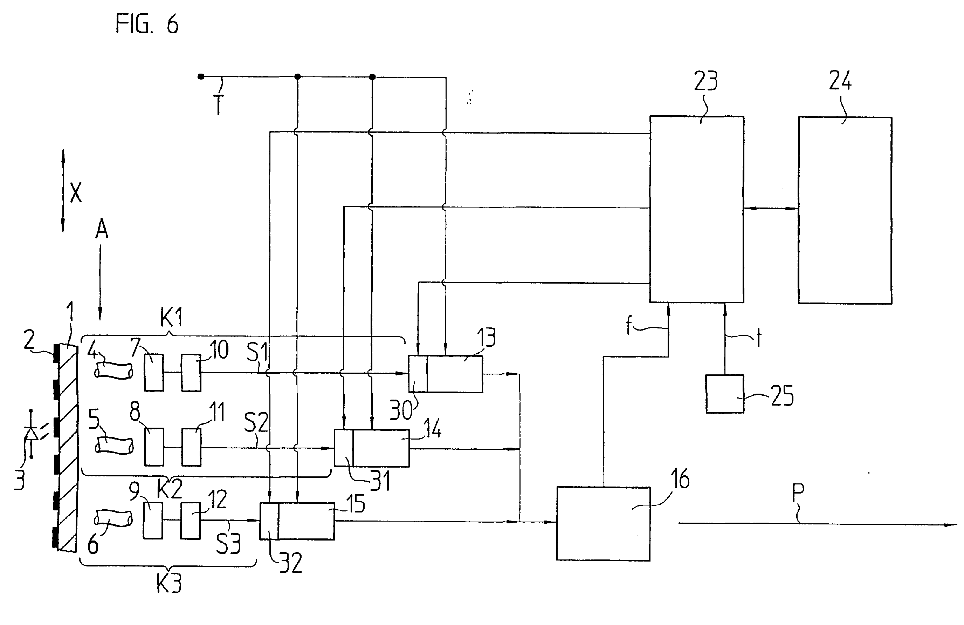

Anhand der Figur 6 wird ein zweites Ausführungsbeispiel einer Positionsmesseinrichtung erläutert. Der Ausgleich von unterschiedlichen Laufzeiten in den Abtastkanälen K1, K2, K3 erfolgt durch in die Abtastkanäle K1, K2, K3 eingebrachte Laufzeitglieder 30, 31, 32. Der Aufbau entspricht weitgehend der ersten Positionsmesseinrichtung, weshalb gleichwirkende Bauelemente bei allen Beispielen mit gleichen Bezugszeichen versehen sind. Die Laufzeit der Abtastsignale S1, S2, S3 wird statisch vorgegeben oder dynamisch in Abhängigkeit der momentanen Frequenz zumindest eines der Abtastsignale S1, S2, S3 eingestellt, so dass alle abgespeicherten Momentanwerte der Abtastsignale S1, S2, S3 gleichzeitig auftretende Momentanwerte der Abtastsignale S1, S2, S3 an der Abtaststelle A sind. Die zeitliche Verzögerung zwischen dem Auftreten der Momentanwerte an der Abtaststelle A und dem Einspeichern in die Speicherelemente 13, 14, 15 kann somit für alle Abtastkanäle K1, K2, K3 auf einen konstanten Wert eingestellt werden. Dieser Zeitversatz kann dabei in den nachfolgenden Berechnungen durch Inter- oder Extrapolationsverfahren von Positionswerten berücksichtigt und kompensiert werden.

Zusammenfassend betrifft die zweite Ausführung der Erfindung also ein Verfahren zur Positionsbestimmung mit folgenden Verfahrensschritten:
Erzeugen mehrerer positionsabhängiger Abtastsignale (S1, S2, S3);
Übertragen jedes der Abtastsignale (S1, S2, S3) von einer Abtaststelle (A) über einen Abtastkanal (K1, K2, K3) zu einem Speicherelement (13, 14, 15);
Abspeichern eines an dem Speicherelement (13, 14, 15) anstehenden Momentanwertes zu einem Einspeicherzeitpunkt;
Bilden eines Positionsmesswertes (P) aus den abgespeicherten Momentanwerten der Abtastsignale (S1, S2, S3), wobei
unterschiedliche Laufzeiten der Abtastsignale (S1, S2, S3) in den Abtastkanälen (K1, K2, K3) durch individuelles verzögern der Abtastsignale (S1, S2, S3) ausgeglichen wird, so dass die abgespeicherten Momentanwerte der Abtastsignale (S1, S2, S3) Momentanwerte sind, die zu einem gemeinsamen Zeitpunkt an der Abtaststelle (A) aufgetreten sind.

Die zweite Ausführung der Erfindung betrifft zusammenfassend auch eine Positionsmesseinrichtung mit
einer Abtaststelle (A) zur Erzeugung mehrerer positionsabhängiger Abtastsignale (S1, S2, S3);
Abtastkanälen (K1, K2, K3) zur Übertragung der Abtastsignale (S1, S2, S3) von der Abtaststelle (A) zu Speicherelementen (13, 14, 15), wobei jedem Abtastsignal (S1, S2, S3) ein Abtastkanal (K1, K2, K3) und ein Speicherelement (13, 14, 15) zugeordnet ist;
einer Auswerteeinheit (16) zur Bildung eines Positionsmesswertes (P) aus in den Speicherelementen (13, 14, 15) übernommenen Momentanwerten der Abtastsignale (S1, S2, S3);
Mittel (30, 31, 32), um die Laufzeiten der Abtastsignale (S1, S2, S3) in den Abtastkanälen (K1, K2, K3) individuell zu beeinflussen, so dass die abgespeicherten Momentanwerte der Abtastsignale (S1, S2, S3) Momentanwerte sind, die zu einem gemeinsamen Zeitpunkt an der Abtaststelle (A) aufgetreten sind.

## Patentansprüche

1. Verfahren zur Positionsbestimmung mit folgenden Verfahrensschritten:
- Erzeugen mehrerer positionsabhängiger Abtastsignale (S1, S2, S3);
- Übertragen jedes der Abtastsignale (S1, S2, S3) von einer Abtaststelle (A) über einen Abtastkanal (K1, K2, K3) zu einem Speicherelement (13, 14, 15);
- Abspeichern eines an dem Speicherelement (13, 14, 15) anstehenden Momentanwertes zu einem Einspeicherzeitpunkt;
- Bilden eines Positionsmesswertes (P) aus den abgespeicherten Momentanwerten der Abtastsignale (S1, S2, S3), **dadurch gekennzeichnet, dass**
- die Laufzeiten der Abtastsignale (S1, S2, S3) in zumindest zwei Abtastkanälen (K1, K2, K3) unterschiedlich sind, und dass das Abspeichern zu an die unterschiedlichen Laufzeiten angepassten Zeitpunkten erfolgt, so dass die abgespeicherten Momentanwerte der Abtastsignale (S1, S2, S3) Momentanwerte sind, die zu einem gemeinsamen Zeitpunkt an der Abtaststelle (A) aufgetreten sind.

2. Verfahren zur Positionsbestimmung mit folgenden Verfahrensschritten:
- Erzeugen mehrerer positionsabhängiger Abtastsignale (S1, S2, S3);
- Übertragen jedes der Abtastsignale (S1, S2, S3) von einer Abtaststelle (A) über einen Abtastkanal (K1, K2, K3) zu einem Speicherelement (13, 14, 15);
- Abspeichern eines an dem Speicherelement (13, 14, 15) anstehenden Momentanwertes zu einem Einspeicherzeitpunkt;
- Bilden eines Positionsmesswertes (P) aus den abgespeicherten Momentanwerten der Abtastsignale (S1, S2, S3), **dadurch gekennzeichnet, dass**
- unterschiedliche Laufzeiten der Abtastsignale (S1, S2, S3) in den Abtastkanälen (K1, K2, K3) durch individuelles verzögern der Abtastsignale (S1, S2, S3) ausgeglichen wird, so dass die abgespeicherten Momentanwerte der Abtastsignale (S1, S2, S3) Momentanwerte sind, die zu einem gemeinsamen Zeitpunkt an der Abtaststelle (A) aufgetreten sind.

3. Verfahren nach Anspruch 1 oder 2, **dadurch gekennzeichnet, dass** an der Abtaststelle (A) gegeneinander phasenverschobene periodische Abtastsignale (S1, S2, S3) gleicher Periode erzeugt werden und der Positionsmesswert (P) durch Interpolation gebildet wird.

4. Verfahren nach Anspruch 1 oder 3, **dadurch gekennzeichnet, dass** die Einspeicherung der Momentanwerte durch einen gemeinsamen Einspeicherbefehl (T) veranlasst wird, wobei der Einspeicherbefehl (T) zumindest zwei Speicherelementen (13, 14, 15) unterschiedlich verzögert zugeführt wird.

5. Verfahren nach einem der Ansprüche 1, 3 oder 4 **dadurch gekennzeichnet, dass** die Einspeicherung der Momentanwerte durch einen gemeinsamen Einspeicherbefehl (T) veranlasst wird, wobei der Einspeicherbefehl (T) den Speicherelementen (13, 14, 15) verzögert zugeführt wird und die Verzögerungszeit gleich der Laufzeit in dem jeweiligen Abtastkanal (K1, K2, K3) eingestellt ist.

6. Verfahren nach Anspruch 4 oder 5, **dadurch gekennzeichnet, dass** die Verzögerungszeit abhängig von der Momentanfrequenz der Abtastsignale (s1, S2, S3) eingestellt wird.

7. Positionsmesseinrichtung mit
- einer Abtaststelle (A) zur Erzeugung mehrerer positionsabhängiger Abtastsignale (S1, S2, S3);
- Abtastkanälen (K1, K2, K3) zur Übertragung der Abtastsignale (S1, S2, S3) von der Abtaststelle (A) zu Speicherelementen (13, 14, 15), wobei jedem Abtastsignal (S1, S2, S3) ein Abtastkanal (K1, K2, K3) und ein Speicherelement (13, 14, 15) zugeordnet ist;
- einer Auswerteeinheit (16) zur Bildung eines Positionsmesswertes (P) aus in den Speicherelementen (13, 14, 15) übernommenen Momentanwerten der Abtastsignale (S1, S2, S3), **gekennzeichnet durch**
- Mittel (20, 21, 22), um die Speicherung von Momentanwerten der Abtastsignale (S1, S2, S3) zur Kompensation von unterschiedlichen Laufzeiten der Abtastsignale (S1, S2, S3) in den Abtastkanälen (K1, K2, K3) zu unterschiedlichen Zeitpunkten zu veranlassen, so dass die abgespeicherten Momentanwerte der Abtastsignale (S1, S2, S3) Momentanwerte sind, die zu einem gemeinsamen Zeitpunkt an der Abtaststelle (A) aufgetreten sind.

8. Positionsmesseinrichtung mit
- einer Abtaststelle (A) zur Erzeugung mehrerer positionsabhängiger Abtastsignale (S1, S2, S3);
- Abtastkanälen (K1, K2, K3) zur Übertragung der Abtastsignale (S1, S2, S3) von der Abtaststelle (A) zu Speicherelementen (13, 14, 15), wobei jedem Abtastsignal (S1, S2, S3) ein Abtastkanal (K1, K2, K3) und ein Speicherelement (13, 14, 15) zugeordnet ist;
- einer Auswerteeinheit (16) zur Bildung eines Positionsmesswertes (P) aus in den Speicherelementen (13, 14, 15) übernommenen Momentanwerten der Abtastsignale (S1, S2, S3), **gekennzeichnet durch**
- Mittel (30, 31, 32), um die Laufzeiten der Abtastsignale (S1, S2, S3) in den Abtastkanälen (K1, K2, K3) individuell zu beeinflussen, so dass die abgespeicherten Momentanwerte der Abtastsignale (S1, S2, S3) Momentanwerte sind, die zu einem gemeinsamen Zeitpunkt an der Abtaststelle (A) aufgetreten sind.

9. Positionsmesseinrichtung nach Anspruch 7 oder 8, **dadurch gekennzeichnet, dass** die Abtastsignale (S1, S2, S3) gegeneinander phasenverschobene periodische Abtastsignale (S1, S2, S3) gleicher Periode sind und die Auswerteeinheit eine Interpolationseinheit (16) zur Unterteilung einer Periode ist.

10. Positionsmesseinrichtung nach Anspruch 9, **dadurch gekennzeichnet, dass** die Phasenverschiebung 120° oder 90° beträgt.

11. Positionsmesseinrichtung nach Anspruch 7, **dadurch gekennzeichnet, dass** jedem Speicherelement (13, 14, 15) ein Einspeicherbefehl (T1, T2, T3) zugeführt ist, der eine Einspeicherung eines anstehenden Momentanwertes veranlasst, und dass die Einspeicherbefehle (T1, T2, T3) von einem gemeinsamen Einspeicherbefehl (T) abgeleitet sind, wobei zumindest einer der Einspeicherbefehle (T1, T2, T3) der über ein Verzögerungsglied (20, 21, 22) verzögerte gemeinsame Einspeicherbefehl (T) ist.

12. Positionsmesseinrichtung nach Anspruch 11, **dadurch gekennzeichnet, dass** jedem Speicherelement (13, 14, 15) ein Verzögerungsglied (20, 21, 22) zur individuellen Verzögerung des gemeinsamen Einspeicherbefehls (T) zugeordnet ist.

13. Positionsmesseinrichtung nach Anspruch 12, **dadurch gekennzeichnet, dass** die Verzögerungszeit der den Abtastkanälen (K1, K2, K3) zugeordneten Verzögerungsglieder (20, 21, 22) der Laufzeit des Abtastsignals (S1, S2, S3) in dem jeweiligen Abtastkanal (K1, K2, K3) entspricht.

## Claims

1. Method for position determination having the following method steps:
- production of a plurality of position-dependent scanning signals (S1, S2, S3);
- transmission of each of the scanning signals (S1, S2, S3) from a scanning position (A) via a scanning channel (K1, K2, K3) to a memory element (13, 14, 15);
- storage of an instantaneous value present at the memory element (13, 14, 15) at a storage time;
- formation of a measured position value (P) from the stored instantaneous values of the scanning signals (S1, S2, S3),
**characterised in that**
- the running times of the scanning signals (S1, S2, S3) are different in at least two scanning channels (K1, K2, K3) and **in that** storage is effected at times which are matched to the different running times, so that the stored instantaneous values of the scanning signals (S1, S2, S3) are instantaneous values which have appeared at a common time at the scanning position (A).

2. Method for position determination having the following method steps:
- production of a plurality of position-dependent scanning signals (S1, S2, S3);
- transmission of each of the scanning signals (S1, S2, S3) from a scanning position (A) via a scanning channel (K1, K2, K3) to a memory element (13, 14, 15);
- storage of an instantaneous value present at the memory element (13, 14, 15) at a storage time;
- formation of a measured position value (P) from the stored instantaneous values of the scanning signals (S1, S2, S3),
**characterised in that**
- different running times of the scanning signals (S1, S2, S3) in the scanning channels (K1, K2, K3) due to individual delay of the scanning signals (S1, S2, S3) are compensated for so that the stored instantaneous values of the scanning signals (S1, S2, S3) are instantaneous values which have appeared at a common time at the scanning position (A).

3. Method according to claim 1 or 2, **characterised in that** mutually phase-shifted, periodic scanning signals (S1, S2, S3) with identical periods are produced at the scanning position (A) and the measured position value (P) is formed by interpolation.

4. Method according to claim 1 or 3, **characterised in that** storage of the instantaneous values is caused by a common storage command (T), the storage command (T) being supplied with a different delay to at least two storage elements (13, 14, 15).

5. Method according to one of the claims 1, 3 or 4, **characterised in that** storage of the instantaneous values is caused by a common storage command (T), the storage command (T) being supplied with a delay to the storage elements (13, 14, 15) and the delay time being adjusted to be equal to the running time in the respective scanning channel (K1, K2, K3).

6. Method according to claim 4 or 5, **characterised in that** the delay time is adjusted as a function of the instantaneous frequency of the scanning signals (S1, S2, S3).

7. Position measuring device having
- a scanning position (A) for producing a plurality of position-dependent scanning signals (S1, S2, S3);
- scanning channels (K1, K2, K3) for transmitting the scanning signals (S1, S2, S3) from the scanning position (A) to storage elements (13, 14, 15), a scanning channel (K1, K2, K3) and a storage element (13, 14, 15) being assigned to each scanning signal (S1, S2, S3);
- an evaluation unit (16) for forming a measured position value (P) from instantaneous values of the scanning signals (S1, S2, S3) adopted in the storage elements (13, 14, 15),
**characterised by**
- means (20, 21, 22) in order to cause storage of the instantaneous values of the scanning signals (S1, S2, S3) for compensation of different running times of the scanning signals (S1, S2, S3) in the scanning channels (K1, K2, K3) at different times, so that the stored instantaneous values of the scanning signals (S1, S2, S3) are instantaneous values which have appeared at a common time at the scanning position (A).

8. Position measuring device having
- a scanning position (A) for producing a plurality of position-dependent scanning signals (S1, S2, S3);
- scanning channels (K1, K2, K3) for transmitting the scanning signals (S1, S2, S3) from the scanning position (A) to storage elements (13, 14, 15), a scanning channel (K1, K2, K3) and a storage element (13, 14, 15) being assigned to each scanning signal (S1, S2, S3);
- an evaluation unit (16) for forming a measured position value (P) from instantaneous values of the scanning signals (S1, S2, S3) adopted in the storage elements (13, 14, 15),
**characterised by**
- means (30, 31, 32) in order to influence individually the running times of the scanning signals (S1, S2, S3) in the scanning channels (K1, K2, K3), so that the stored instantaneous values of the scanning signals (S1, S2, S3) are instantaneous values which have appeared at a common time at the scanning position (A).

9. Position measuring device according to claim 7 or 8, **characterised in that** the scanning signals (S1, S2, S3) of mutually phase-shifted, periodic scanning signals (S1, S2, S3) have identical periods and the evaluation unit is an interpolation unit (16) for subdividing a period.

10. Position measuring device according to claim 9, **characterised in that** the phase-shift is 120° or 90°.

11. Position measuring device according to claim 7, **characterised in that** a storage command (T1, T2, T3) is supplied to each storage element (13, 14, 15), which storage command causes storage of an instantaneous value which is present, and **in that** the storage commands (T1, T2, T3) are derived from a common storage command (T), at least one of the storage commands (T1, T2, T3) being the common storage command (T) which is delayed via a delay member (20, 21, 22).

12. Position measuring device according to claim 11, **characterised in that** a delay member (20, 21, 22) for individual delay of the common storage command (T) is assigned to each storage element (13, 14, 15).

13. Position measuring device according to claim 12, **characterised in that** the delay time of the delay members (20, 21, 22) which are assigned to the scanning channels (K1, K2, K3) corresponds to the running time of the scanning signal (S1, S2, S3) in the respective scanning channel (K1, K2, K3).

## Revendications

1. Procédé de détermination de position, comprenant les étapes suivantes :
- génération de plusieurs signaux de balayage (S1, S2, S3) dépendant de la position;
- transmission de chaque signal de balayage (S1, S2, S3) depuis un point de lecture (A) à un élément de mémoire (13, 14, 15), via un canal de lecture (K1, K2, K3);
- mémorisation d'une valeur instantanée envoyée à l'élément de mémoire (13, 14, 15), à un instant de mise en mémoire;
- établissement d'une valeur de mesure de position (P) à partir des valeurs instantanées mémorisées des signaux de balayage (S1, S2, S3), **caractérisé en ce que**
- les temps de parcours des signaux de balayage (S1, S2, S3) dans au moins deux canaux de lecture (K1, K2, K3) sont différents, et **en ce que** la mise en mémoire s'effectue à des instants adaptés aux temps de parcours différents, de sorte que les valeurs instantanées mémorisées des signaux de balayage (S1, S2, S3) sont des valeurs instantanées qui sont apparues à un instant commun au point de lecture (A).

2. Procédé de détermination de position, comprenant les étapes suivantes :
- génération de plusieurs signaux de balayage (S1, S2, S3) dépendant de la position;
- transmission de chaque signal de balayage (S1, S2, S3) depuis un point de lecture (A) à un élément de mémoire (13, 14, 15), via un canal de lecture (K1, K2, K3);
- mémorisation d'une valeur instantanée envoyée à l'élément de mémoire (13, 14, 15), à un instant de mise en mémoire;
- établissement d'une valeur de mesure de position (P) à partir des valeurs instantanées mémorisées des signaux de balayage (S1, S2, S3), **caractérisé en ce que**
- des temps de parcours différents des signaux de balayage (S1, S2, S3) dans les canaux de lecture (K1, K2, K3) sont compensés par une temporisation individuelle des signaux de balayage (S1, S2, S3), de sorte que les valeurs instantanées mémorisées des signaux de balayage (S1, S2, S3) sont des valeurs instantanées qui sont apparues à un instant commun au point de lecture (A).

3. Procédé selon la revendication 1 ou 2, **caractérisé en ce que** des signaux de balayage (S1, S2, S3) périodiques de période identique, mutuellement déphasés, sont générés au point de lecture (A) et la valeur de mesure de position (P) est établie par interpolation.

4. Procédé selon la revendication 1 ou 3, **caractérisé en ce que** la mise en mémoire des valeurs instantanées est déclenchée par une instruction d'enregistrement (T) commune, l'instruction d'enregistrement (T) étant transmise à au moins deux éléments de mémoire (13, 14, 15), avec des temporisations différentes.

5. Procédé selon une des revendications 1, 3 ou 4, **caractérisé en ce que** la mise en mémoire des valeurs instantanées est déclenchée par une instruction d'enregistrement (T) commune, l'instruction d'enregistrement (T) étant transmise de manière temporisée aux éléments de mémoire (13, 14, 15) et le délai de temporisation étant réglé pour être identique au temps de parcours dans le canal de lecture (K1, K2, K3) concerné.

6. Procédé selon la revendication 4 ou 5, **caractérisé en ce que** le délai de temporisation est réglé en fonction de la fréquence instantanée des signaux de balayage (S1, S2, S3).

7. Dispositif de mesure de position, comprenant
- un point de lecture (A) pour générer plusieurs signaux de balayage (S1, S2, S3) dépendant de la position;
- des canaux de lecture (K1, K2, K3) pour transmettre les signaux de balayage (S1, S2, S3) du point de lecture (A) à des éléments de mémoire (13, 14, 15), un canal de lecture (K1, K2, K3) et un élément de mémoire (13, 14, 15) étant associés à chaque signal de balayage (S1, S2, S3);
- une unité de traitement (16) pour établir une valeur de mesure de position (P) à partir de valeurs instantanées enregistrées dans les éléments de mémoire (13, 14, 15), **caractérisé en ce qu'**il comprend
- des moyens (20, 21, 22) pour déclencher la mise en mémoire de valeurs instantanées des signaux de balayage (S1, S2, S3), à des instants différents, en vue de compenser des temps de parcours différents des signaux de balayage (S1, S2, S3) dans les canaux de lecture (K1, K2, K3), de sorte que les valeurs instantanées mémorisées des signaux de balayage (S1, S2, S3) sont des valeurs instantanées qui sont apparues à un instant commun au point de lecture (A).

8. Dispositif de mesure de position, comprenant
- un point de lecture (A) pour générer plusieurs signaux de balayage (S1, S2, S3) dépendant de la position;
- des canaux de lecture (K1, K2, K3) pour transmettre les signaux de balayage (S1, S2, S3) du point de lecture (A) à des éléments de mémoire (13, 14, 15), un canal de lecture (K1, K2, K3) et un élément de mémoire (13, 14, 15) étant associés à chaque signal de balayage (S1, S2, S3);
- une unité de traitement (16) pour établir une valeur de mesure de position (P) à partir de valeurs instantanées enregistrées dans les éléments de mémoire (13, 14, 15), **caractérisé en ce qu'**il comprend
- des moyens (30, 31, 32) pour agir individuellement sur les temps de parcours des signaux de balayage (S1, S2, S3) dans les canaux de lecture (K1, K2, K3), de sorte que les valeurs instantanées mémorisées des signaux de balayage (S1, S2, S3) sont des valeurs instantanées qui sont apparues à un instant commun au point de lecture (A).

9. Dispositif de mesure de position selon la revendication 7 ou 8, **caractérisé en ce que** les signaux de balayage (S1, S2, S3) sont des signaux de balayage (S1, S2, S3) périodiques de période identique, mutuellement déphasés, et l'unité de traitement est une unité d'interpolation (16) destinée à subdiviser une période.

10. Dispositif de mesure de position selon la revendication 9, **caractérisé en ce que** le déphasage est de 120° ou 90°.

11. Dispositif de mesure de position selon la revendication 7, **caractérisé en ce que** chaque élément de mémoire (13, 14, 15) reçoit une instruction d'enregistrement (T1, T2, T3) qui déclenche une mise en mémoire d'une valeur instantanée transmise, et **en ce que** les instructions d'enregistrement (T1, T2, T3) sont dérivées d'une instruction d'enregistrement (T) commune, au moins l'une des instructions d'enregistrement (T1, T2, T3) étant l'instruction (T) commune retardée par un élément de temporisation (20, 21, 22).

12. Dispositif de mesure de position selon la revendication 11, **caractérisé en ce qu'**un élément de temporisation (20, 21, 22) est associé à chaque élément de mémoire (13, 14, 15), en vue de la temporisation individuelle de l'instruction d'enregistrement (T) commune.

13. Dispositif de mesure de position selon la revendication 12, **caractérisé en ce que** le délai de temporisation des éléments de temporisation (20, 21, 22) associés aux canaux de lecture (K1, K2, K3) correspond au temps de parcours du signal de balayage (S1, S2, S3) dans le canal de lecture (K1, K2, K3) concerné.
